# EUROPEAN PATENT APPLICATION

(11) **EP 4 768 993 A1**
(43) Date of publication of application: **01.07.2026**
(21) Application number: 24860152.8
(22) Date of filing: 05.07.2024
(51) Int. Cl.: G01T 1/24

(54) **X-RAY DETECTOR**

(30) Priority: 25.08.2023 KR 20230111911
(71) Applicant: Rayence Co., Ltd., Hwaseong-si, Gyeonggi-do 18449 (KR); Vatech Ewoo Holdings Co., Ltd., Hwaseong-si, Gyeonggi-do 18449 (KR)
(72) Inventor: JEONG, Jin Woong, Hwaseong-si Gyeonggi-do 18449 (KR); LEE, Ho Seok, Hwaseong-si Gyeonggi-do 18449 (KR)
(74) Representative: Lorenz & Kollegen
(86) International application number: PCT/KR2024/009550
(87) International publication number: WO 2025/048229

(57) **Abstract**

Proposed is an X-ray detector. The X-ray detector includes a pixel array panel including a plurality of pixels, a single-photon avalanche diode disposed within each pixel, a diode driving circuit disposed within each pixel and including a pulse generation circuit configured to convert an electrical signal output from an output terminal of the single-photon avalanche diode into an output signal in a form of a pulse, a pixel control circuit disposed within each pixel and including a first control circuit configured to output the output signal as a clock signal, and a counter circuit disposed within each pixel and including an n-bit counter configured to use the clock signal (where n is an integer equal to or larger than 2) to count events.

## Description

### CROSS REFERENCE TO RELATED APPLICATION

The present application claims priority to Korean Patent Application No. 10-2023-0111911, filed on August 25, 2023, the entire contents of which are incorporated herein for all purposes by this reference.

### BACKGROUND

### Technical Field

The present disclosure relates to an X-ray detector.

### Description of the Related Art

Recently, digital detectors have been widely used for X-ray imaging.

An X-ray detector includes a photodiode. In recent years, research has been conducted on the use of an avalanche diode having an advantage of high signal gain. Particularly, research has been conducted on the use of a Single-Photon Avalanche Diode (SPAD).

However, a conventional image sensor using a Single-Photon Avalanche Diode (SPAD) is configured to count pulses by using an analog counter. In this case, it is difficult to implement high resolution and a wide dynamic range, and noise is generated in a process of converting an analog signal into a digital signal and reading out the digital signal.

Therefore, when an X-ray detector has the same pixel configuration as that of the conventional image sensor, substantially the same problem occurs.

### SUMMARY

An objective of the present disclosure is to provide an X-ray detector using a Single-Photon Avalanche Diode (SPAD), the X-ray detector being capable of implementing high resolution and a wide dynamic range and also preventing occurrence of noise.

In order to achieve the objective of the present disclosure, according to the present disclosure, there is provided an X-ray detector including: a pixel array panel including a plurality of pixels; a single-photon avalanche diode disposed within each pixel; a diode driving circuit disposed within each pixel, the diode driving circuit including a pulse generation circuit configured to convert an electrical signal output from an output terminal of the single-photon avalanche diode into an output signal in a form of a pulse; a pixel control circuit disposed within each pixel, the pixel control circuit including a first control circuit configured to output the output signal as a clock signal; and a counter circuit disposed within each pixel, the counter circuit including an n-bit counter configured to use the clock signal to count events (where n is an integer equal to or larger than 2) .

The diode driving circuit may include: a recharge transistor connected to the output terminal of the single-photon avalanche diode; a recharge control circuit having a first input terminal connected to an output terminal of the pulse generation circuit, the recharge control circuit having a second input terminal receiving an enable control signal, and the recharge control circuit having an output terminal connected to a gate electrode of the recharge transistor; and an enable transistor having a gate electrode receiving the enable control signal, the enable transistor having a source electrode connected to the output terminal of the single-photon avalanche diode, and the enable transistor having a drain electrode receiving a deactivation voltage.

A bias voltage applied to a cathode of the single-photon avalanche diode may be a sum of a breakdown voltage and an excess voltage, and the deactivation voltage may be larger than the excess voltage.

The pixel control circuit may include a second control circuit configured to receive an enable signal and an output control signal that is output from the n-bit counter and to output the enable control signal, wherein the enable signal may determine an integration period, and wherein the output control signal may become an off level when a counting value of the n-bit counter reaches a maximum value representable by n bits.

The counter circuit may include an output circuit configured to output a data signal corresponding to the n bits stored in the n-bit counter to a data line, wherein the n-bit counter may be configured to divide the n bits of the data signal into k parts (where k is an integer equal to or larger than 2 and less than n) and to output first through k-th divided signals each having n/k bits.

The output circuit may include, for each of the first through the k-th divided signals, n/k driving transistors and n/k switching transistors, wherein each of the n/k driving transistors corresponding to each divided signal may have a gate electrode connected to a corresponding output terminal of the n-bit counter, and may have a drain electrode connected to a corresponding one of the n/k switching transistors, wherein each of the n/k switching transistors corresponding to each divided signal may have a gate electrode configured to receive a corresponding scan signal, and may have a drain electrode connected to a corresponding data line, and wherein each data line may be configured to transmit a corresponding bit of the divided signal output from the switching transistor connected thereto.

The n-bit counter may be configured to receive a bit adjustment signal for adjusting the number of bits of the n-bit counter.

According to the resent disclosure, by providing the digital counter in the pixel having the single-photon avalanche diode, a digital data signal may be directly generated within the pixel and may be read out.

Accordingly, in a process of reading out the data signal, occurrence of noise is substantially zero, so that image quality may be maximized. In addition, by using the n-bit digital counter, it becomes possible to generate an image having a wide dynamic range and high resolution, which are difficult to be generated by using an analog counter.

### BRIEF DESCRIPTION OF THE DRAWINGS

FIG. 1 is a view schematically illustrating a configuration of an X-ray detector according to an embodiment of the present disclosure.
FIG. 2 is a circuit diagram schematically illustrating an example of a configuration of a pixel of the X-ray detector according to an embodiment of the present disclosure.
FIG. 3 is a circuit diagram illustrating a Single-Photon Avalanche Diode (SPAD) and a diode driving circuit of the pixel according to an embodiment of the present disclosure.
FIG. 4 is a circuit diagram schematically illustrating a control circuit and a counter circuit of the pixel according to an embodiment of the present disclosure.
FIG. 5 is a timing diagram illustrating signals for operating the pixel according to an embodiment of the present disclosure.

### DETAILED DESCRIPTION

Hereinafter, an embodiment of the present disclosure will be described in detail with reference to the drawings.

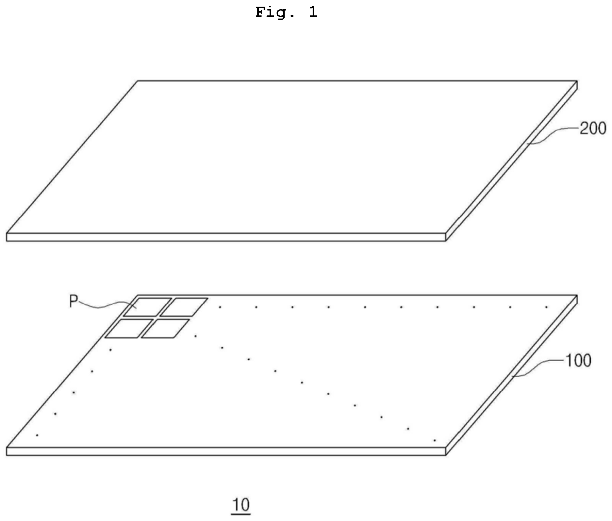

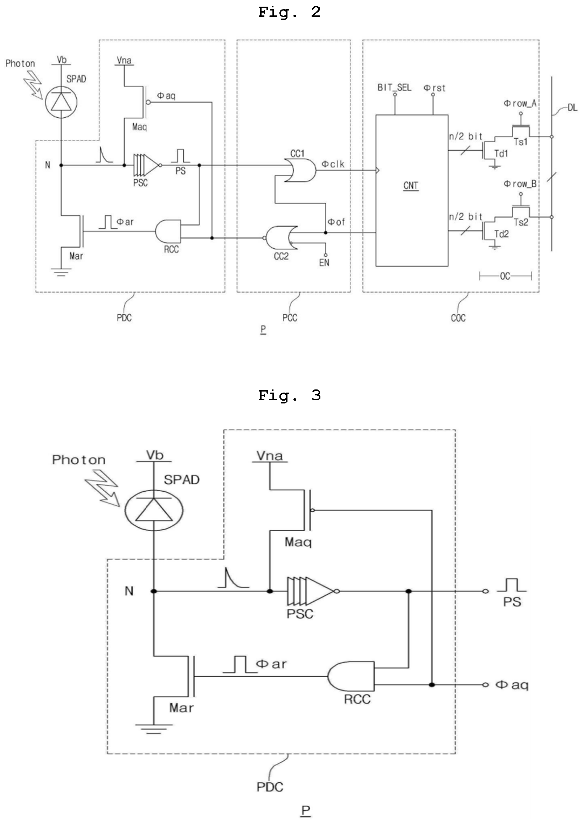

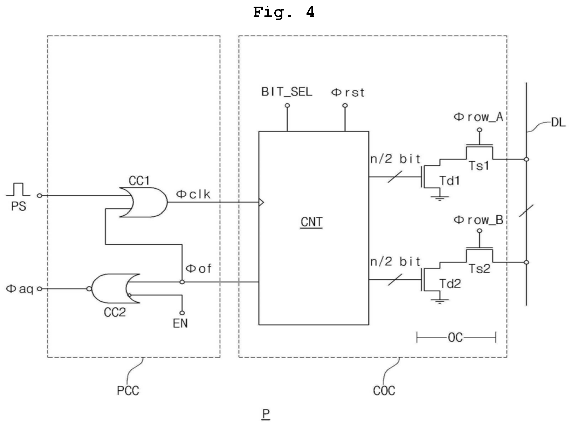

FIG. 1 is a view schematically illustrating a configuration of an X-ray detector according to an embodiment of the present disclosure. FIG. 2 is a circuit diagram schematically illustrating an example of a configuration of a pixel of the X-ray detector according to an embodiment of the present disclosure. FIG. 3 is a circuit diagram illustrating a Single-Photon Avalanche Diode (SPAD) and a diode driving circuit of the pixel according to an embodiment of the present disclosure, and FIG. 4 is a circuit diagram schematically illustrating a control circuit and a counter circuit of the pixel according to an embodiment of the present disclosure.

Referring to FIG. 1 and FIG. 2, an X-ray detector 10 according to an embodiment of the present disclosure may include a pixel array panel (or a sensor panel) 100 and a scintillator 200.

The scintillator 200 may be disposed on a light receiving surface of the pixel array panel 100. The scintillator 200 is configured to convert incident X-rays into visible light, and the visible light is provided to the pixel array panel 100. Furthermore, an avalanche photodiode (or an avalanche light receiving element) provided in a pixel P, for example, a Single-Photon Avalanche Diode (SPAD), may detect photons of the visible light and may generate an electrical signal.

The pixel array panel 100 may include an active area in which X-ray detection is substantially performed, and may include a non-active area disposed outside the active area.

In the active area, a pixel array including a plurality of pixels P is disposed, and the plurality of pixels P may be arranged in a matrix form along a plurality of row lines and a plurality of column lines.

Each pixel P may detect photons of the visible light generated from the scintillator 200 by using the Single-Photon Avalanche Diode (SPAD), may generate a corresponding pulse signal, may count the number of photons, and may output a counted value.

With regard to a configuration of the pixel P, referring to FIG. 2 to FIG. 4 by way of example, each pixel P may include a Single-Photon Avalanche Diode (SPAD), a diode driving circuit PDC, a pixel control circuit PCC, and a counter circuit COC.

One electrode (or a first electrode) of the Single-Photon Avalanche Diode (SPAD), for example, an anode of the Single-Photon Avalanche Diode (SPAD), may be connected to the diode driving circuit PDC. In addition, the other electrode (or a second electrode) of the Single-Photon Avalanche Diode (SPAD), for example, a cathode of the Single-Photon Avalanche Diode (SPAD), may receive a driving voltage that is a bias voltage (or a reverse voltage) Vb.

Here, the bias voltage Vb is a voltage for operating the Single-Photon Avalanche Diode (SPAD) in a Geiger mode so as to generate avalanche amplification, and it is preferable that the bias voltage Vb has a voltage larger than a breakdown voltage Vbd. For example, the bias voltage Vb may be expressed as a sum of the breakdown voltage Vbd and an excess voltage Vex that is equal to or larger than a minimum level for operating the Single-Photon Avalanche Diode (SPAD) in the Geiger mode, i.e., Vb = Vbd + Vex.

In a state in which the bias voltage Vb having a potential higher than the breakdown voltage Vbd is applied so as to operate the Single-Photon Avalanche Diode (SPAD), i.e., in an activated state, the Single-Photon Avalanche Diode (SPAD) generates an electrical signal (otherwise, a diode signal or a detection signal) in response to an incident photon.

The diode driving circuit PDC may include, for example, a pulse generation circuit (otherwise, a delay circuit or a shaping circuit) PSC, a recharge transistor (or a first transistor) Mar, an enable transistor (or a second transistor) Maq, and a recharge control circuit RCC.

The pulse generation circuit PSC is an output terminal of the Single-Photon Avalanche Diode (SPAD), and may be connected to a node N between the anode of the Single-Photon Avalanche Diode (SPAD) and the recharge transistor Mar. The pulse generation circuit PSC may convert (or shape) an electrical signal output from the Single-Photon Avalanche Diode (SPAD) in response to a photon into an output signal PS that is a digital signal in the form of a pulse (or a square wave form), and may output the output signal PS. For example, the pulse generation circuit PSC may be formed of a plurality of serially connected inverters, more specifically, an even number of inverters. In this case, the pulse generation circuit PSC may output the output signal PS after delaying the output signal PS by a predetermined time (for example, several nanoseconds to several microseconds).

The recharge transistor Mar may be connected in series with the Single-Photon Avalanche Diode (SPAD), and an electrical signal may be output through the output terminal that is the node N between the recharge transistor Mar and the Single-Photon Avalanche Diode (SPAD). The recharge transistor Mar may be configured as, for example, an N-type transistor, but is not limited thereto.

When a recharge signal Φar that is a control signal is applied to a gate electrode of the recharge transistor Mar, the recharge transistor Mar is turned on. Accordingly, the Single-Photon Avalanche Diode (SPAD) is recharged to an initial state, and a diode voltage substantially corresponding to the bias voltage Vb may be applied across the Single-Photon Avalanche Diode (SPAD).

The recharge control circuit RCC may generate and output the recharge signal Φar for controlling a switching operation of the recharge transistor Mar. For example, the recharge control circuit RCC may be configured as an AND gate. Here, the AND gate may receive the output signal PS of the pulse generation circuit PSC at a first input terminal, and may receive an enable control signal Φaq output from the pixel control circuit PCC at a second input terminal. Accordingly, the AND gate may output the recharge signal Φar by performing an AND logic operation on the output signal PS and the enable control signal Φaq.

For example, when the pixel P is in a normal state that is an activated state, the enable control signal Φaq may have a logic value of "1" that is a high level. In this state, when the output signal PS in the form of a pulse is generated, the recharge control circuit RCC outputs the recharge signal Φar in the form of a pulse in response to the output signal PS. In this case, the recharge transistor Mar is turned on by the recharge signal Φar and, accordingly, the Single-Photon Avalanche Diode (SPAD) is recharged. Furthermore, the diode voltage substantially corresponding to the bias voltage Vb is applied across the Single-Photon Avalanche Diode (SPAD), and the Single-Photon Avalanche Diode (SPAD) may enter an activated state capable of detecting photons.

The enable transistor Maq may be configured as a transistor of a type opposite to that of the recharge transistor Mar, for example, a P-type transistor, but is not limited thereto. A drain electrode (or a source electrode) of the enable transistor Maq may be connected to the node N between the recharge transistor Mar and the Single-Photon Avalanche Diode (SPAD). In addition, a source electrode (or a drain electrode) of the enable transistor Maq may receive a deactivation voltage Vna. In addition, a gate electrode of the enable transistor Maq may receive the enable control signal Φaq.

Here, the deactivation voltage Vna may have a voltage larger than the excess voltage Vex of the bias voltage Vb. In addition, the deactivation voltage Vna may have a voltage smaller than the breakdown voltage Vbd.

For example, in a situation in which the enable control signal Φaq has a logic value of "0" that is a low level, the enable transistor Maq may be turned on, and the deactivation voltage Vna may be applied to the node N between the recharge transistor Mar and the Single-Photon Avalanche Diode (SPAD).

In this situation, a diode voltage applied to the Single-Photon Avalanche Diode (SPAD) becomes Vb - Vna = Vbd + Vex - Vna (Vna > Vex), so that a voltage smaller than the breakdown voltage Vbd is applied across the Single-Photon Avalanche Diode (SPAD). Accordingly, the Single-Photon Avalanche Diode (SPAD) enters a deactivated state and does not detect photons. On the other hand, in a situation in which the enable control signal Φaq has a logic value of "1" that is a high level, the enable transistor Maq may be turned off, and the deactivation voltage Vna is not applied to the node N between the recharge transistor Mar and the Single-Photon Avalanche Diode (SPAD), so that the Single-Photon Avalanche Diode (SPAD) maintains the activated state and outputs an electrical signal in response to an incident photon.

As described above, according to the logic value of the enable control signal Φaq, the pixel P, more specifically, the Single-Photon Avalanche Diode (SPAD), may be activated or deactivated. In the activated state, an electrical signal is generated from the Single-Photon Avalanche Diode (SPAD) in response to a photon, and the electrical signal may be converted into the output signal PS in the form of a pulse by the diode driving circuit PDC and the output signal PS may be output.

Accordingly, the enable control signal Φaq may have a logic value of "1" (or a turn-off level) so that the Single-Photon Avalanche Diode (SPAD) has the activated state during an integration time that is a period for detecting X-rays. Meanwhile, the enable control signal Φaq may have a logic value of "0" (or a turn-on level) so that the Single-Photon Avalanche Diode (SPAD) has the deactivated state during a readout time for reading out (or outputting) a detected (or counted) data signal (or a pixel signal) from the pixel P after completion of the integration time.

The pixel control circuit PCC may include, for example, a first control circuit CC1 and a second control circuit CC2. The first control circuit CC1 may output the output signal PS output from the diode driving circuit PDC as a clock signal Φclk. The first control circuit CC1 may receive, as input signals, the output signal PS output from the diode driving circuit PDC and an output control signal (or an overflow signal) Φof provided from the counter circuit COC, more specifically, from a counter CNT.

Here, with regard to the output control signal Φof, when a value counted in the counter CNT reaches a predetermined bit, for example, a most significant bit of a preset number of bits, the output control signal Φof corresponds to a signal for stopping the operation of the Single-Photon Avalanche Diode (SPAD), i.e., deactivating the Single-Photon Avalanche Diode (SPAD), so as to stop the generation of the output signal PS and the clock signal Φclk is generated, thereby stopping a counting operation in the counter CNT. In other words, when the counted value of the counter CNT reaches a predetermined saturation value, the output control signal Φof may be used to stop counting.

For example, before the counted value is saturated during an integration period, the output control signal Φof may have a logic value of "0" that is a low level (or an on level). Furthermore, when the counted value reaches the predetermined saturation value, the output control signal Φof may have a logic value of "1" that is a high level (or an off level).

The first control circuit CC1 may be configured as, for example, an OR gate, and may output the clock signal Φclk by performing an OR logic operation on the output signal PS and the output control signal Φof.

When the output control signal Φof is "0", the first control circuit CC1 may output the input output signal PS as the clock signal Φclk, and the counter CNT may use the clock signal Φclk to count events.

On the other hand, when the counted value is saturated, the output control signal Φof becomes "1", the output signal PS is not generated, and the first control circuit CC1 may stop outputting the clock signal Φclk.

The second control circuit CC2 may output the enable control signal Φaq for controlling activation/deactivation of the Single-Photon Avalanche Diode (SPAD). The second control circuit CC2 may receive, for example, an enable signal EN and the output control signal Φof as input signals.

The enable signal EN is a signal for determining the integration period. For example, during the integration period, the enable signal EN may have a logic value of "1" that is a high level. Furthermore, during a readout period after the integration period, the enable signal EN may have a logic value of "0" that is a low level.

The second control circuit CC2 may be configured as, for example, a NOR gate. Furthermore, a first input terminal of the NOR gate may receive the output control signal Φof, and a second input terminal as an inverted input terminal may receive the enable signal EN.

In this case, the second control circuit CC2 may output the enable control signal Φaq by performing a NOR logic operation on the output control signal Φof and an inverted signal of the enable signal EN.

Here, when counting of the counter circuit COC is saturated and the output control signal Φof becomes a high level, the enable control signal Φaq becomes a low level that is a turn-on level, the enable transistor Maq is turned on, the deactivation voltage Vna is applied to the node N, and the Single-Photon Avalanche Diode (SPAD) may be in the deactivated state. Accordingly, the operation of the Single-Photon Avalanche Diode (SPAD) is stopped, so that power consumption may be reduced.

In addition, when the integration period ends, the enable signal EN becomes a low level, the enable control signal Φaq becomes a low level that is a turn-on level, the enable transistor Maq is turned on, and the Single-Photon Avalanche Diode (SPAD) may be in the deactivated state.

The counter circuit COC may include, for example, the counter CNT and an output circuit OC.

During the integration period, the counter CNT may receive the clock signal Φclk in the form of a pulse output from the first control circuit CC1, may use the clock signal Φclk to count events, and may store a counted value. When the counted value in the counter CNT becomes a maximum value of a set bit, for example, a maximum value of n bits (n is an integer of 2 or more), and is saturated, a counting operation may be stopped and the output control signal Φof may be generated.

Meanwhile, the counter CNT may receive a bit adjustment signal BIT_SEL and a reset signal Φrst.

The bit adjustment signal BIT_SEL is a signal for adjusting (or setting) the number of bits countable by the counter (CNT), i.e., the number of bits of a data signal of the pixel P, and n may be adjusted to 8 bits, 9 bits, 10 bits, and so on as an example. Through such bit adjustment, a dynamic range required in the X-ray detector 10 may be optimized and power consumption may be reduced.

The reset signal Φrst may be used for resetting the counter CNT to initialize a counted value. For example, before the integration period starts, the reset signal Φrst may be applied so as to reset the counter CNT.

During the readout period, the output circuit OC may output a data signal to a data line DL, the data signal being a digital value counted in the counter CNT.

The output circuit OC may be configured, for example, to divide n bits of the data signal into k (an integer equal to or larger than 2 and less than n) parts and output the divided parts. In the present embodiment, a case in which an n-bit data signal is divided into two parts and is output as a first divided signal that is an n/2-bit signal and a second divided signal that is another n/2-bit signal is exemplified. When the data signal is divided into two parts as described above, the output circuit OC may include a first driving transistor Td1 and a first switching transistor Ts1 for outputting the first divided signal of n/2 bits, and may include a second driving transistor Td2 and a second switching transistor Ts2 for outputting the second divided signal of n/2 bits. Here, the first divided signal may be, for example, upper n/2 bits (or lower n/2 bits) of the data signal, and the second divided signal may be, for example, lower n/2 bits (or upper n/2 bits) of the data signal.

Here, the first driving transistor Td1 and the first switching transistor Ts1 may be configured to correspond to n/2 bits of the first divided signal. In other words, n/2 first driving transistors Td1 and n/2 first switching transistors Ts1 may be provided to correspond to n/2 bits of the first divided signal.

Likewise, the second driving transistor Td2 and the second switching transistor Ts2 may be configured to correspond to n/2 bits of the second divided signal. In other words, n/2 second driving transistors Td2 and n/2 second switching transistors Ts2 may be provided to correspond to n/2 bits of the second divided signal.

Meanwhile, with respect to data lines DL connected to each pixel P, n/2 data lines DL corresponding to the number of bits of the first divided signal and the second divided signal may be provided. In other words, each of the n/2 data lines DL may be configured to be connected to the n/2 first switching transistors Ts1 and also to the n/2 second switching transistors Ts2. In this case, during a period in which the first divided signal is output, each of the n/2 data lines DL may transmit each of n/2 bits of the first divided signal output from the n/2 first switching transistors Ts1. Furthermore, during a period in which the second divided signal is output, each of the n/2 data lines DL may transmit each of n/2 bits of the second divided signal output from the n/2 second switching transistors Ts2.

A gate electrode of the first driving transistor Td1 may be connected to a first output terminal of the counter CNT outputting a corresponding bit of the first divided signal, a drain electrode of the first driving transistor Td1 may be connected to the first switching transistor Ts1, and a source electrode of the first driving transistor Td1 may be connected to a ground voltage (or a low potential voltage). In addition, a gate electrode of the first switching transistor Ts1 may receive a first scan signal Φrow_A, a source electrode of the first switching transistor Ts1 may be connected to a corresponding first driving transistor Td1, and a drain electrode of the first switching transistor Ts1 may be connected to a corresponding data line DL.

In addition, a gate electrode of the second driving transistor Td2 may be connected to a second output terminal of the counter CNT outputting a corresponding bit of the second divided signal, a drain electrode of the second driving transistor Td2 may be connected to the second switching transistor Ts2, and a source electrode of the second driving transistor Td2 may be connected to a ground voltage (or a low potential voltage). In addition, a gate electrode of the second switching transistor Ts2 may receive a second scan signal Φrow_B, a source electrode of the second switching transistor Ts2 may be connected to a corresponding second driving transistor Td2, and a drain electrode of the second switching transistor Ts2 may be connected to a corresponding data line DL.

In this case, while the first scan signal Φrow_A of a turn-on level is applied, the first switching transistor Ts1 is turned on, and the first divided signal of n/2 bits may be output to the n/2 data lines DL. Thereafter, while the second scan signal Φrow_B of a turn-on level is applied, the second switching transistor Ts2 is turned on, and the second divided signal of n/2 bits may be output to the n/2 data lines DL.

As described above, during the readout period, in each pixel P disposed in each row line, an n-bit data signal in a digital form may be divided and output.

Since the data signal is divided and output as described above, the number of data lines connected to each column line may be reduced to the number of bits of the divided signal, so that an area occupied by the data lines may be reduced.

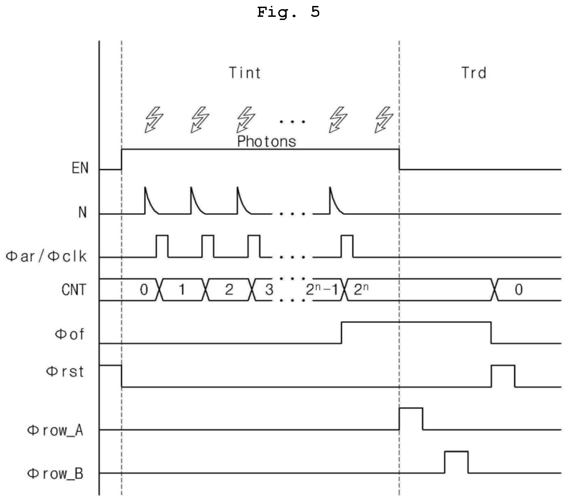

Hereinafter, an operation of the pixel P in the integration period and the readout period will be described with reference to FIG. 5. FIG. 5 is a timing diagram illustrating signals for operating the pixel according to an embodiment of the present disclosure.

Referring to FIG. 2 to FIG. 4 and FIG. 5, before a start of an integration period Tint, the reset signal Φrst may be applied to the counter CNT so that the counter (CNT) is reset.

Thereafter, the enable signal EN is applied so that the Single-Photon Avalanche Diode (SPAD) is activated, and the integration period Tint may start. In the integration period Tint, when photons are incident on the Single-Photon Avalanche Diode (SPAD) due to X-ray irradiation, an electrical signal is generated and is input to the diode driving circuit PDC.

The diode driving circuit PDC outputs the output signal PS in the form of a pulse by delaying the input electrical signal, and may generate the recharge signal Φar according to the output signal PS.

The output signal PS is input to the first control circuit CC1 of the pixel control circuit PCC, so that the clock signal Φclk may be output.

The clock signal Φclk is input to the counter CNT of the counter circuit COC and may be counted. Such counting may be performed until a maximum value of a set bit is reached within the integration period Tint. When a counted value within the integration period Tint becomes the maximum value, the counting operation may be stopped.

After the integration period Tint ends, in a readout period Trd, a digital data signal stored in the counter CNT may be output through the data line DL. For example, during an output time in which the first scan signal Φrow_A is applied, a first divided signal that is an n/2-bit data signal is output. Thereafter, during an output time in which the second scan signal Φrow_B is applied, a second divided signal that is a remaining n/2-bit data signal may be output.

After such readout period Trd ends, the reset signal Φclk may be applied again to reset the counter CNT and, thereafter, the above-described operation may be repeated.

As described above, in the present embodiment, an electrical signal detected by the Single-Photon Avalanche Diode (SPAD) may be converted into the output signal PS in the form of a pulse and may be counted by using the digital counter CNT, so that a digital data signal may be directly generated within the pixel P and may be read out.

Since such a digital data signal is substantially not affected by noise, occurrence of noise is substantially zero in a process of reading out the digital data signal, so that image quality may be maximized. In addition, by using an n-bit digital counter, it becomes possible to generate an image having a wide dynamic range and high resolution that are difficult to be generated by using an analog counter.

The above-described embodiment of the present disclosure is an example of the present disclosure, and free modification is possible within the scope included in the spirit of the present disclosure. Accordingly, the present disclosure includes modifications of the present disclosure within the scope of the appended claims and the equivalents thereof.

## Claims

1. An X-ray detector comprising:
a pixel array panel comprising a plurality of pixels;
a single-photon avalanche diode disposed within each pixel;
a diode driving circuit disposed within each pixel, the diode driving circuit comprising a pulse generation circuit configured to convert an electrical signal output from an output terminal of the single-photon avalanche diode into an output signal in a form of a pulse;
a pixel control circuit disposed within each pixel, the pixel control circuit comprising a first control circuit configured to output the output signal as a clock signal; and
a counter circuit disposed within each pixel, the counter circuit comprising an n-bit counter configured to count the clock signal (where n is an integer equal to or larger than 2).

2. The X-ray detector of claim 1, wherein the diode driving circuit comprises:
a recharge transistor connected to the output terminal of the single-photon avalanche diode;
a recharge control circuit having a first input terminal connected to an output terminal of the pulse generation circuit, the recharge control circuit having a second input terminal receiving an enable control signal, and the recharge control circuit having an output terminal connected to a gate electrode of the recharge transistor; and
an enable transistor having a gate electrode receiving the enable control signal, the enable transistor having a source electrode connected to the output terminal of the single-photon avalanche diode, and the enable transistor having a drain electrode receiving a deactivation voltage.

3. The X-ray detector of claim 2, wherein a bias voltage applied to a cathode of the single-photon avalanche diode is a sum of a breakdown voltage and an excess voltage, and the deactivation voltage is larger than the excess voltage.

4. The X-ray detector of claim 1 or claim 2, wherein the pixel control circuit comprises:
a second control circuit configured to receive an enable signal and an output control signal that is output from the n-bit counter and to output the enable control signal,
wherein the enable signal determines an integration period, and
wherein the output control signal becomes an off level when a counting value of the n-bit counter reaches a maximum value representable by n bits.

5. The X-ray detector of claim 1 or claim 2, wherein the counter circuit comprises an output circuit configured to output a data signal corresponding to the n bits stored in the n-bit counter to a data line, and
wherein the n-bit counter is configured to divide the n bits of the data signal into k parts (where k is an integer equal to or larger than 2 and less than n) and to output first through k-th divided signals each having n/k bits.

6. The X-ray detector of claim 5, wherein the output circuit comprises, for each of the first through the k-th divided signals, n/k driving transistors and n/k switching transistors,
wherein each of the n/k driving transistors corresponding to each divided signal has a gate electrode connected to a corresponding output terminal of the n-bit counter, and has a drain electrode connected to a corresponding one of the n/k switching transistors,
wherein each of the n/k switching transistors corresponding to each divided signal has a gate electrode configured to receive a corresponding scan signal, and has a drain electrode connected to a corresponding data line, and
wherein each data line is configured to transmit a corresponding bit of the divided signal output from the switching transistor connected thereto.

7. The X-ray detector of claim 1, wherein the n-bit counter is configured to receive a bit adjustment signal for adjusting the number of bits of the n-bit counter.
